Europäisches Patentamt

European Patent Office

Office européen des brevets

(11) Publication number: **0 076 972**
**B1**

(12) **EUROPEAN PATENT SPECIFICATION**

(45) Date of publication of patent specification: **14.12.88**

(51) Int. Cl.⁴: **G 06 K 3/02**

(21) Application number: **82109016.4**

(22) Date of filing: **29.09.82**

(54) Document processing system and equipment.

(30) Priority: **01.10.81 US 307808**
**01.10.81 US 307685**
**01.10.81 US 307686**
**01.10.81 US 307537**
**01.10.81 US 307809**

(43) Date of publication of application:
**20.04.83 Bulletin 83/16**

(45) Publication of the grant of the patent:
**14.12.88 Bulletin 88/50**

(84) Designated Contracting States:
**AT BE CH DE FR GB IT LI LU NL SE**

(56) References cited:
**US-A-3 787 660**
**US-A-4 027 142**
**US-A-4 264 808**
**US-A-4 283 621**

(73) Proprietor: **BancTec, Inc.**
**14500 Midway Road**
**Dallas Texas 75240 (US)**

(72) Inventor: **Van Tyne, Richard B.**
**805 Edgefield**
**Richardson Texas 75080 (US)**
Inventor: **Dempster, Roy Eugene**
**1129 Princeton**
**Richardson Texas 75081 (US)**
Inventor: **McDonald, William C.**
**2301 Richwood Drive**
**Garland Texas 75042 (US)**
Inventor: **Levine, Richard C.**
**7950 Woodstone**
**Dallas Texas 75248 (US)**
Inventor: **Torkelson, John**
**3764 Pallos Verdas**
**Dallas Texas 75229 (US)**
Inventor: **Sanders, Weldon Arthur, Jr.**
**2406 Cloverhill**
**Seagoville Texas 751259 (US)**
Inventor: **Johnson, Gerald Lee**
**5013 Royalshire Lane**
**Garland Texas 75042 (US)**
Inventor: **Nolting, Eugene C.**
**Box 2412**
**Gardnerville Nevada 80410 (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP  0 076 972  B1**

(56) References cited:

Inventor: **Allen, John Houston**
**5606 Ember Ct.**
**Arlington Texas 76016 (US)**
Inventor: **Lebrun, Thomas Q.**
**5 Willow Wood**
**Dallas Texas 75205 (US)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

## Description

This invention relates to an apparatus for encoding discrete documents transported through an encoding station as set forth in the preamble of claim 1. An apparatus of this kind is known from US—A—3,787,660.

Such an encoding apparatus usually forms part of a document processing system adapted to be utilized in the processing of financial documents, such as checks, invoices, payment advices, vouchers, drafts, credit card charges, and the like.

Document processors which read and sort financial documents have been in common use for some time; however various other functions which are necessary to most financial operations have been relegated to separate sub-systems or specialized processors to prevent major bottlenecks in the document processing system. One of the peripheral functions which have not, in the past, been accomplished by the primary document processor is encoding with magnetic ink.

Other parts of such a document processing system are disclosed in detail and claimed in the following divisional applications: EP—A—185 198 "Data Compressing System" EP—A—184 682 "Digital Scanner" and EP—A—185 200 "Video Formatter".

The encoding apparatus as disclosed in the aforementioned US—A—3,787,660 is adapted for encoding discrete documents by means of an encoding station comprising a continuously rotating print cylinder with a plurality of character imprinters. In the prior art apparatus, the document is maintined stationary in the course of the encoding process. The apparatus further includes a hammer support assembly, including a plurality of striking means adapted to strike a corresponding character imprinter formed by the continuously rotating print cylinder. The encoding station further includes a transport mechanism for an inked nylon ribbon disposed between the hammer support assembly including the striking means and the character imprinters. The transport mechanism is adapted for advancing the ink ribbon which is continuously advanced independent from whether a document is present or absent at the encoding station.

Each encoding operation requires a feeding of the document to be encoded to the encoding station, holding the document stationary during the encoding procedure and the removal of the document from the encoding station thereafter. Hence, the prior art apparatus has a relatively low speed of operation.

It is therefore the object of the present invention to provide an encoding apparatus as set forth above, which is adapted for a high-speed encoding process.

This object is attained by the characterizing features of claim 1. Preferred embodiments of the invention are subject matter of the dependent claims.

In the encoding apparatus of the present invention, the documents are continuously transported between a plurality of fixed dies and a plurality of electronically controlled hammers. A magnetic ink-bearing ribbon is interposed between the documents and the fixed dies and is transported at the same velocity as the documents. As the documents traverse the plurality of fixed dies, the electronically controlled hammers are cycled, in a selected sequence and at selected positions. In those applications in which the cycle time of the electronically controlled hammer is too slow to allow identical coding in adjacent positions, a second plurality of fixed dies and associated electronically controlled hammers may be located adjacent to the first plurality or interspersed among the first plurality of fixed dies. The ribbon is prevented from being advanced during the absence of a document at the encoding station but is moved in sychonization with the documents during the printing operation, so that it is guaranteed that unused ribbon is in front of a hammer position when the hammer is actuated at said position. Thus, single use magnetic ribbon may be used.

## Brief description of the drawings

The invention as well as a preferred mode of use, further objects and advantages thereof, will best be understood by reference to the following detailed description of an illustrative embodiment when read in conjunction with the accompanying drawings, wherein:

Figures 1a and 1b form a general block diagram of a document processing system in which the encoder of the present invention is used, .

Figure 2 depicts a diagrammatic view of a document transport of the document processing system;

Figure 3a depicts a block diagram of the encoder of the present invention, and

Figure 3b depicts a diagrammatic view of the encoder of the present invention.

## General system description

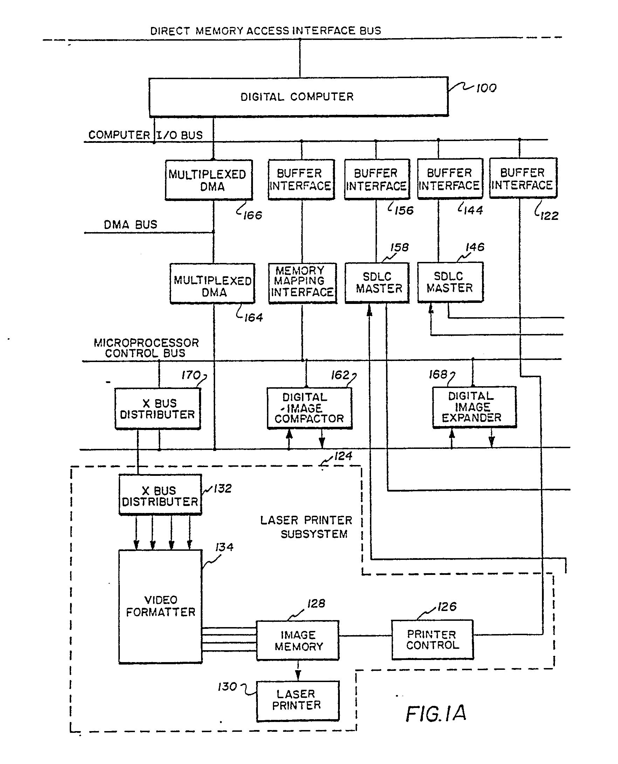

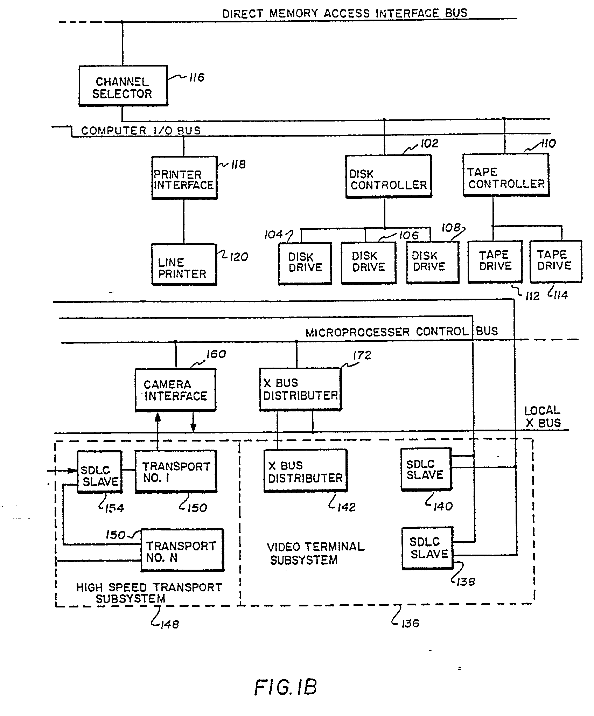

Referring to Figures 1a and 1b, there is depicted a general block diagram of various subsystems of a document processing system which comprises the encoding apparatus of the present invention.

The document processing system is controlled by a digital computer 100. Digital computer 100 coordinates the storage and retrieval of digitized document images and associated data which are stored in magnetic disk storage. A disk controller 102 controls the actual access of digitized document images via disk drives 104, 106, and 108. Additional data, accounting information or program data may be accessed by digital computer 100 through a tape controller 110 which controls magnetic tape drives 112 and 114. Digital computer 100 may selectively access either magnetic disk storage or magnetic tape storage through a channel selector 116.

Digital computer 100 interfaces with a local operator via a computer I/O bus and printer interface 118. Printer interface 118 controls a line printer 120.

Digital computer 100 also controls the operation of a laser printer subsystem 124, through a laser printer interface 122. Laser printer subsystem 124 is utilized to provide hard copy of selected digital images and may be utilized to generate account statements, billing statements, or other correspondence comprising any combination of alphanumeric characters and images.

A video terminal subsystem 136 is utilized in the document processing system to provide a real time, controllable video display of selected documents and alphanumeric information. The display is utilized to facilitate processing of information on each document. Digital computer 100 controls the operation of a video terminal subsystem 136 through a buffer interface 144 and a synchronous data link control master 146.

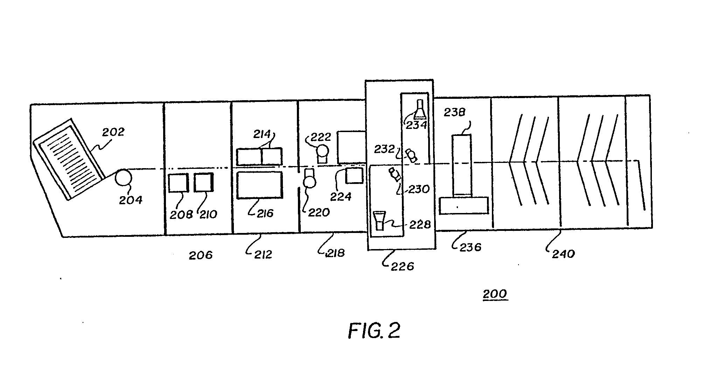

A high speed transport subsystem 148 is utilized to transport individual documents through image capture stations, machine readers, encoders and sorters. A plurality of high speed transports may be utilized within each document processing system, thereby increasing the capacity of an individual system. High speed transport system 148 is controlled utilizing a buffer interface 156 and a synchronous data link control master 158. High speed transport system 148 will be explained in greater detail with respect to Figure 2.

Digital image data obtained from the digital camera or cameras installed in each high speed transport is transferred to a camera interface 160 which is utilized to couple the image data to a digital image compactor 162. Digital image compactor 162 is utilized to remove any redundancies contained in a selected image and to encode the remaining data. In addition to the specific algorithm taught in the disclosed embodiment, the document processing system of the present invention, the document processing system of the present invention will function with other known data compaction algorithms, such as, for example, the CCITT standard algorithm. The compacted image data may be transferred to storage via a multiplexed direct memory access 164 and a multiplexed direct memory access 166. Two direct memory systems are utilized in order to provide compatible interfaces between the local X - bus and the direct memory access interface bus of digital computer 100.

Retrieval and display of a compacted digital image may take place in several ways. A compacted image is transferred to the local X bus via direct memory access 164 and direct memory access 166. The compacted image is applied to a digital image expander 168. The redundancies present in the original image are restored and the subsequent image is transferred via a X bus distributor 170 or a X bus distributor 172 to either laser printer subsystem 124 or video terminal subsystem 136 for reproduction of a hard copy or an electronic image.

Digital computer

The document processing system in which the present invention takes part utilizes a digital computer 100, Figure 1, to control the operation of the system and coordinate the storage and retrieval of document images. Supplementing the computer's main memory store are disc drives 104, 106 and 108 and tape drives 112 and 114.

Document transport

Referring now to Figure 2, there is depicted a diagrammatic plan view of a document transport 200. The transport constructed and depicted in Figure 2 utilizes high speed endless belts which are driven by pinch rollers in the manner well known in the art. The pinch rollers are driven by synchronous AC motors at a nominal speed of 52 inches per second (132 cm/s) in the disclosed embodiment.

Documents are loaded into document transport 200 by means of a document hopper 202. Single documents are loaded from document hopper 202 vis a feed drum 204. The documents are then passed along document transport 200 between rollers and the endless belts (not shown).

The first section of document transport 200, a reader section 206, includes an optical character reader 208 (OCR) and a magnetic ink character reader 210. OCR reader 208 may be utilized in the applications wherein the amount field or other information is printed in an OCR format.

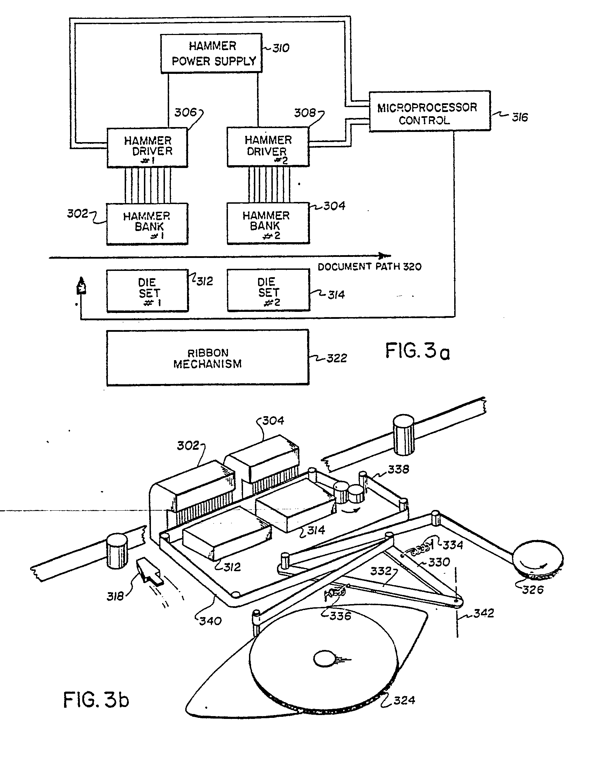

The next section of document transport 200 is an encoder section 212. Encoder section 212 includes a hammer bank assembly 214 and a die and ribbon assembly 216 and is utilized to encode selected documents with selectable indicia, while the document is traversing document transport 200. The operation of the encoder section will be explained in greater detail with reference to Figure 3.

Section 218 of document transport 200 is an endorser section. Endorser section 218 contains ink jet printers 220 and 222 and an endorser 224. Ink jet printers 220 and 222 are standard state of the art ink jet printers that may be utilized, to print selected indicia upon each document which passes through document transport 200. Endorser 224 is utilized to endorse documents such as checks.

The next section in document transport 200, through which each document is transported, is a camera section 226. Camera section 226 contains two digital video cameras, 228 and 234 and two illumination sources, 230 and 232. Each document which passes through camera section 226 is scanned on both sides utilizing video cameras 228 and 234.

The penultimate section of document transport 200, a microfilm section 236, contains a microprocessor controlled microfilm recorder 238 which is utilized to provide hard copy of selected documents which have been processed by the system.

The final section of document transport 200 is a stacker section 240. Stacker section 240, in any manner well known in the art, sorts the documents processed through document transport 200 into one of several pockets.

## Encoder

With reference now to Figure 3a, there is depicted a schematic view of the encoder 300 of the present invention. An important feature of the present invention is an ability to encode continuously moving documents. In known document processing systems document encoding proves to be the major bottleneck to high speed processing. Typical solutions have included a separate slower portion of the document processor in which a document is stepped through an encoder, or a separate off-line encoder. Document encoder 300 is capable of encoding documents which are continuously moving at the rate of the document processing system of the present invention.

Document encoder 300 utilizes, in the illustrated embodiment of the present invention, two identical electromagnetic hammer banks, a first hammer bank 302 and another hammer bank 304. It will be apparent, however, upon reference to the foregoing explanation, that a fewer or greater number of hammer banks may be utilized in systems wherein slower or faster transport speeds are desired. Hammer banks 302 and 304 are electromagnetic hammers. Each hammer bank is controlled by a hammer driver. In the disclosed embodiment, a first hammer driver 306 controls hammer bank 302 and another hammer driver 308 controls hammer bank 304. A hammer power supply 310 provides operating power for all hammer drivers and hammer banks.

Positioned opposite each hammer bank is an appropriately encoded die. The selection of characters utilized in a particular application is strictly a design choice and may include OCR characters, MICR characters or any other desired character pattern. The illustrated embodiment includes two substantially identical die sets, a first die set 312 and another die set 314. However, as a matter of design choice, a single die set may be utilized. Also included in the illustrated embodiment is a microprocessor control 316, which provides control signals to hammer drivers 306 and 308 in response to signals from an optical sensor 318. Optical sensor 318 is utilized to detect the presence of a document along a document path 320. A ribbon mechanism 322 is also depicted in Figure 3a, and will be explained in greater detail with reference to Figure 3b.

Figure 3b depicts a partially diagrammatic view of the major components of document encoder 300. As explained above, hammer banks 302 and 304 selectively strike portions of die sets 312 and 314, upon receipt of control signals generated by the microprocessor control 316 (see Figure 3a), in conjunction with an item presence signal generated by optical sensor 318.

Ribbon mechanism 322 (Figure 3a) is shown in greater detail in Figure 3b and includes a ribbon supply reel 324, a ribbon takeup reel 326, ribbon tensioning arms 330 and 332 and a ribbon capstan 338. Ribbon supply reel 324 provides a fresh supply of magnetic ink ribbon 340. Such magnetic ink ribbons are typically single strike ribbons, that is to say the magnetic ink associated with each character is totally removed from the ribbon during the printing of that character and further attempts to print utilizing the same section of ribbon 340 will result in invalid magnetic signatures. Therefore, it is necessary to advance magnetic ink ribbon 340 after each character is printed, and it is advantageous, from an economy standpoint, to advance ribbon 340 only while a document is present in encoder 300. This is accomplished utilizing ribbon capstan 338 which is electronically controlled by microprocessor control 316 during those periods when a document is detected by optical sensor 318. For reasons which will be explained below, ribbon 340 is driven by ribbon capstan 338 at the same speed as documents on the transport. The rapid acceleration of ribbon 340 to transport speed is accomplished without damage to ribbon 340 utilizing ribbon tensioning arms 330 and 332. Ribbon tensioning arms 330 and 332 are pivotally mounted at a point 342 and resiliently biased utilizing springs 334 and 336. A rapid acceleration of ribbon 340 is then absorbed by ribbon tensioning arms 330 and 332 until ribbon supply reel 324 and ribbon takeup reel 326 can compensate.

In operation, encoder 300 utilizes two character sets to compensate for the duty cycle of the hammer bank utilized. Each individual hammer within hammer banks 306 and 308 has a duty cycle of approximately .004 seconds. Document encoding standards for MICR require individual characters to be encoded approximately one-eighth inch (~3 mm) apart, or one-tenth inch (~2,5 mm) spacing for OCR. At a nominal transport speed of 52 inches per second (132 cm/s) a document will travel one-eighth inch (~3 mm) in approximately .0024 seconds. It should therefore be apparent that with a duty cycle of .004 seconds, a single hammer and die combination will be unable to repetitively strike a single character at one-eighth inch (~3 mm) intervals. Thus, the use of multiple hammers and substantially identical character sets will allow full encoding at the present duty cycle. Consider a possible worse base analysis, a desired encoding of eight consecutive identical characters. Those skilled in the art will appreciate that a single hammer and die will be able to encode alternate digit positions at the stated speed of operation. The second group of hammers and characters allows encoder 300 to fill in the missing digits. More specifically, hammer bank 306 and die set 312 may encode the odd digit positions in a desired field, and hammer bank 308 and die set 314 may encode the even digit positions. Thus, it should be apparent that increased or decreased transport speeds may be accommodated by utilizing a greater or fewer number of hammer banks and die sets, without requiring a faster duty cycle for individual hammers. It should also be apparent that since certain portions of a particular digit field may be encoded by one hammer bank while other positions may be encoded by a second hammer bank, it will be advantageous to maintain ribbon 340 at the same speed as the documents passing through encoder 300. By so doing, the used portion of ribbon 340 associated with a particular character will maintain its relative position directly above that particular character on the document.

## Claims

1. Apparatus for encoding discrete documents transported through an encoding station, said apparatus comprising:
   a plurality of character imprinters (312, 314);
   a plurality of movable striking means (302, 304), each of said plurality of striking means positioned, when activated, to strike a particular and corresponding one of said plurality of character imprinters;
   means (200) for transporting said discrete documents through said encoding station between said plurality of character imprinters and said plurality of striking means; and
   a flexible ink bearing ribbon (340) movable between said striking means and said character imprinters for transferring character imprints to said documents, characterized in that
   said character imprinters (312, 314) are stationary character imprinters;
   the apparatus includes control means (316) for advancing said ribbon through said encoding station in the direction of document travel and for activating particular ones of said plurality of striking means (302, 304) in a preselected sequence and at preselected times only in response to a document being present at said encoding station, and
   said control means is effective to prevent advancement of said ribbon through said encoding station during the absence of a document at said encoding station, which encoding station is adapted for encoding said discrete documents as they are continuously transported through said encoding station.

2. The apparatus according to Claim 1, wherein said stationary character imprinters comprise engraved dies (312, 314).

3. The apparatus according to Claim 1, wherein said plurality of movable striking means comprises a bank of electronically controlled hammers (302, 304) which remain stationary when not activated.

4. The apparatus according to Claim 1, wherein said control means comprises a microprocessor (316).

5. The apparatus according to Claim 1, further including means (318) for detecting the presence of a document entering the encoding station between said plurality of character imprinters and said plurality of striking means.

6. The apparatus according to Claim 1 wherein said control means advances said ribbon at the same rate of speed as the rate of speed of transport of said documents.

## Patentansprüche

1. Vorrichtung zur Kodierung einzelner Dokumente, die durch eine Kodierstation transportiert werden, enthaltend:
   eine Vielzahl von Zeichendruckern (312, 314);
   eine Vielzahl beweglicher Schlageinrichtungen (302, 304), wobei jede der Vielzahl von Schlageinrichtungen so positioniert ist, daß sie im aktivierten Zustand auf einen speziellen und zugehörigen aus der Vielzahl der Zeichendrucker schlägt;
   eine Einrichtung (200) zum Transportieren der einzelnen Dokumente durch die Kodierstation zwischen der Genannten Vielzahl von Zeichendruckern und der genannten Vielzahl von Schlageinrichtungen; und
   ein flexibles Farbband (340), des zwischen den Schlageinrichtungen und den Zeichendruckern beweglich ist, um Zeichenabdrucke auf die Dokumente zu übertragen, dadurch gekennzeichnet, daß
   die Zeichendrucker (312, 314) stationäre Zeichendrucker sind;
   die Vorrichtung eine Steuerungseinrichtung (316) für das Fortbewegen des Bandes durch die Kodierstation in der Richtung des Dokumentendurchlaufs und zum Aktivieren spezieller der Vielzahl der Schlageinrichtungen (302, 304) in einer vorgewählten Folge und zu vorgewählten Zeiten nur in Abhängigkeit von der Anwesenheit eines Dokumentes in der Kodierstation aufweist, und die Steuerungseinrichtung wirksam ist, einen Vorschub des Bandes durch die Kodierstation während der Abwesenheit eines Dokumentes in der Kodierstation zu verhindern, welche Kodierstation dazu eingerichtet ist, die genannten einzelnen Dokumente zu kodieren, während sie kontinuierlich durch die Kodierstation transportiert werden.

2. Vorrichtung nach Anspruch 1, bei der die stationären Zeichendrucker geprägte Druckplatten 312, 314) enthalten.

3. Vorrichtung nach Anspruch 1, bei der die Vielzahl der beweglichen Schlageinrichtungen aus einer Bank elektronisch gesteuerter Hämmer (302, 304) bestehen, die im nicht-aktivierten Zustand stationär bleiben.

4. Vorrichtung nach Anspruch 1, bei der die Steuerungseinrichtung einen Mikroprozessor (316) enthält.

5. Vorrichtung nach Anspruch 1, weiterhin enthaltend eine Einrichtung (318) zum Ermitteln der Anwesenheit eines Dokuments, das in die Kodierstation eintritt, zwischen der genannten Vielzahl der Zeichendrucker und der genannten Vielzahl der Schlageinrichtungen.

6. Vorrichtung nach Anspruch 1, bei der die Steuerungs einrichtung das Band mit der gleichen Geschwindigkeitsrate fortbewegt, wie die Transportgeschwindigkeitsrate der genannten Dokumente.

## Revendications

1. Dispositif pour coder des documents séparés tranportés dans un poste de codage, le dispositif comprenant:

un ensemble d'imprimantes de caractères (312, 314);

un ensemble de moyens de percussion mobiles (302, 304), chacun de l'ensemble de moyens de percussion étant positionné, quand il est actionné, pour percuter une imprimante particulière et correspondate de l'ensemble des imprimantes de caractères;

un moyen (200) pour transporter les documents séparés dans le poste de codage situé entre l'ensemble des imprimantes de caractères et l'ensemble de moyens de percussion; et

un ruban souple porteur d'encre (340) mobile entre les moyens de percussion et les imprimantes de caractères pour transférer des impressions de caractères jusqu'aux documents, caractérisé en ce que

les imprimantes de caractères (312, 314) sont des imprimantes de caractéres fixes;

le dispositif comprend un moyen de commande (316) pour faire avancer le ruban dans le poste de codage dans la direction de parcours de document et pour rendre actifs des moyens particuliers de l'ensemble de moyens de percussion (302, 304) dans une séquence prédéterminée et à des temps présélectionnés, seulement en réponse à la présence d'un document dans le poste de codage, et

le moyen de commande est efficace pour empêcher l'avancement du ruban dans le poste de codage pendant l'absence d'un document dans le poste de codage, ce poste de codage étant agencé pour coder les documents séparés quand ils sont transportés en continu dans le poste de codage.

2. Dispositif selon la revendication 1, dans lequel les imprimantes de caractères fixes sont constituées de matrices.gravées (312, 314).

3. Dispositif selon la revendication 1, dans lequel l'ensemble de moyens de percussion mobiles est constitué d'une rangée de marteaux commandés électroniquement (302, 304) qui restent fixes quand ils ne sont pas actionnés.

4. Dispositif selon la revendication 1, dans lequel le moyen de commande est constitué d'un microprocesseur (316).

5. Dispositif selon la revendication 1, incluant en outre un moyen (318) pour détecter la présence d'un document pénétrant dans le poste de codage situé entre l'ensemble d'imprimantes de caractères et l'ensemble de moyens de percussion.

6. Dispositif selon la revendication 1, dans lequel le moyen de commande avance le ruban à la même valeur de vitesse que la valeur de vitesse de transport des documents.

# EP 0 076 972 B1

DIRECT MEMORY ACCESS INTERFACE BUS

DIGITAL COMPUTER ~100

COMPUTER I/O BUS

MULTIPLEXED DMA ~166

BUFFER INTERFACE

BUFFER INTERFACE ~156

BUFFER INTERFACE ~144

BUFFER INTERFACE ~122

DMA BUS

MULTIPLEXED DMA ~164

MEMORY MAPPING INTERFACE

SDLC MASTER ~158

SDLC MASTER ~146

MICROPROCESSOR CONTROL BUS

170~ X BUS DISTRIBUTER

162~ DIGITAL IMAGE COMPACTOR

168~ DIGITAL IMAGE EXPANDER

~124

X BUS DISTRIBUTER ~132

LASER PRINTER SUBSYSTEM

VIDEO FORMATTER ~134

128~ IMAGE MEMORY

126~ PRINTER CONTROL

130~ LASER PRINTER

*FIG.1A*

1

DIRECT MEMORY ACCESS INTERFACE BUS

CHANNEL SELECTOR ~ 116

COMPUTER I/O BUS

PRINTER INTERFACE ~ 118

DISK CONTROLLER ~ 102

TAPE CONTROLLER ~ 110

LINE PRINTER ~ 120

104 — DISK DRIVE

106 — DISK DRIVE

108 — DISK DRIVE

TAPE DRIVE

TAPE DRIVE

112  114

MICROPROCESSER CONTROL BUS

CAMERA INTERFACE ~ 160

X BUS DISTRIBUTER ~ 172

LOCAL X BUS

SDLC SLAVE 154

TRANSPORT NO. 1 150

X BUS DISTRIBUTER 142

SDLC SLAVE 140

150 — TRANSPORT NO. N

VIDEO TERMINAL SUBSYSTEM

SDLC SLAVE 138

HIGH SPEED TRANSPORT SUBSYSTEM 148

136

FIG. IB

FIG.2

EP 0 076 972 B1

HAMMER POWER SUPPLY ~310

MICROPROCESSOR CONTROL ~316

306 308

HAMMER DRIVER #1

HAMMER DRIVER #2

302 HAMMER BANK #1

HAMMER BANK #2 ~304

DOCUMENT PATH 320

DIE SET #1 ~312

DIE SET #2 ~314

RIBBON MECHANISM ~322

FIG. 3a

FIG. 3b

4